# EUROPEAN PATENT SPECIFICATION

(11) **EP 0 288 191 B1**
(45) Date of publication and mention of the grant of the patent: **18.01.1995**
(21) Application number: 88303222.9
(22) Date of filing: 11.04.1988
(51) Int. Cl.: G06F 13/42

(54) **Method and apparatus for data transfer handshake pipelining**
Verfahren und Vorrichtung zur Datenübertragung mit Zeitverschachtelung des Quittungsbetriebs
Méthode et dispositif de transmission de données avec échange de signaux de commande selon le principe pipeline

(30) Priority: 20.04.1987 US 40396
(43) Date of publication of application: 26.10.1988
(73) Proprietor: TANDEM COMPUTERS INCORPORATED, Cupertino California 95014-2599 (US)
(72) Inventor: Silver, Jordan R., San Jose California 95136 (US)
(74) Representative: Ayers, Martyn Lewis Stanley

(56) References cited:
- EP-A- 0 228 811
- EP-A- 0 262 429
- US-A- 4 435 761

## Description

The present invention relates to data processing systems and more particularly to a method and apparatus for controlling data transfers between first and second information processing elements within a data processing system.

Data transfers frequently are initiated by a first or a second information processing element, such as a central processing unit (CPU) or an I/O channel, by one information processing element signalling the other that a data transfer is requested. The device which receives the request then signals that it is ready to make the transfer, the transfer occurs, and the requesting device sends an acknowledgement of completion of the transfer. Finally, the device which received the request for transfer acknowledges that its operation is also complete. Although this is an effective serial "handshake" method for controlling the transfer of data between two information processing elements, the sending device must await the acknowledgement from the receiving device before it attempts another transfer. This wastes time, especially when the sending device must perform other tasks and may be busy when the acknowledgement occurs.

EP-A-0228811 is an example of a prior art synchronous handshake generation system wherein a request to transfer (RTR) signal causes the generation of a request (RQ) signal by requesting unit to a responding unit upon the occurrence of a positive going edge of a clock pulse. The responding unit receives the request signal RQ and generates an acknowledge signal (AK) upon the occurrence of the next clock pulse immediately following the clock pulse which generated the RQ signal. Both the RQ and AK signals are pulses of fixed duration, e.g., greater than one clock cycle but less than two clock cycles.

The request signal is activated at the leading edge of a first clock pulse C1, the AK signal is activated at the leading edge of a second clock pulse C2 (while the request signal RQ is still active) and the RQ signal is deactivated before the leading edge of a third clock pulse C3. The RQ signal is reactivated again at the leading edge of clock pulse C3 while the AK signal is still active. The AK signal is deactivated before the leading edge of a fourth clock pulse C4, and the cycle continues.

A test command signal STOP-HS may be received from the system controller for forcing the deactivation of the request signal. A done signal is generated by a flip-flop in the requesting unit when a handshake cycle is completed. The handshake cycle is considered complete when the acknowledge signal AK is received from the responding unit.

The present invention is directed to an apparatus for controlling data transfer handshake protocol so that certain protocol events may occur prior to or simultaneously with the completion of a preceding protocol event, and the ultimate result of the pending protocol event may be determined at a later time.

According to the present invention, there is provided an apparatus for controlling data transfer from a first information processing element to a second information processing element comprising:
transfer request receiving means for receiving a periodical transfer request signal CPU-XFR from the first information processing element indicating that a data transfer is to occur;
service out signal generating means for generating a service out signal SVO indicating to the second information processing element that a data transfer is to occur;
data accept signal generating means for generating to the first information processing element a data accept signal DATA-ACC being set at a first (low) or a second (high) logical level;
service in signal receiving means for receiving from the second information processing element a service in signal SVI being set at a first or at a second logical level,
wherein a first activation of signal CPU-XFR indicates a first data transfer request;
in response thereto, signal SVO is activated and simultaneously signal DATA-ACC is set to said first logical level indicating that the first data transfer request is pending;
in response to the activation of SVO, signal SVI is set to said second logical level indicating that the first data transfer request has been accepted by the second information processing element;
in response thereto signal DATA-ACC is set to said second logical level indicating to the first information processing element that the first data transfer request has been accepted although the data transfer itself might be not yet completed;
independently therefrom a second activation of signal CPU-XFR indicates a second data transfer request;
wherein if signal SVI is set to said first logical level before arrival of said second transfer request then the first data transfer has been successfully completed and the first data transfer steps are iterated for the second data transfer,
wherein if signal SVI is still set to said second logical level upon arrival of said second transfer request, then the first data transfer has not been successfully completed in which case SVO inhibiting means inhibits the further activation of signal SVO, sets signal DATA-ACC to said first logical level and holds it there until arrival of a third data transfer request, thereby indicating to the first information processing element that the first data transfer was not successfully completed.

In one embodiment of the present invention directed to data transfers between a central processing unit and an I/O channel, the CPU operates to transfer data (either receive or send) between itself and the I/O channel every five processor clock cycles. At the beginning of each set of five clock cycles, the CPU places data on the data bus (or, if receiving data, assumes data is on the data bus) and generates a transfer request (CPU-XFR) signal. If it receives a data accepted (DATA-ACC) signal it anticipates that a previous data transfer has completed. The CPU-XFR signal is generated regardless of whether or not the previous data transfer actually is complete at the time.

In the embodiment described, the previous data transfer normally is completed one clock cycle after the transfer request signal is generated, and at that time a transfer complete signal is generated. If the transfer complete signal is not generated, a transfer inhibit signal is generated for inhibiting the generation of the succeeding DATA-ACC signal (and hence the next CPU-XFR signal) so that the CPU may determine the cause of noncompletion and either abort or retry the previously attempted data transfer.

Fig. 1 is a block diagram of a CPU and I/O channel according to the present invention.

Fig. 2 is a flow chart illustrating data transfer protocol according to the present invention.

Fig. 3 is a schematic diagram of a circuit for controlling data transfers according to the present invention.

Fig. 4 is a diagram illustrating Phase A and Phase B pulses used with the circuit of Fig. 2.

Fig. 5 is a timing diagram illustrating normal operation of the apparatus of Fig. 2.

Fig. 6 is a timing diagram illustrating operation of the circuit of Fig. 2 when a data transfer is inhibited.

### DETAILED DESCRIPTION OF THE PREFERRED EMBODIMENTS

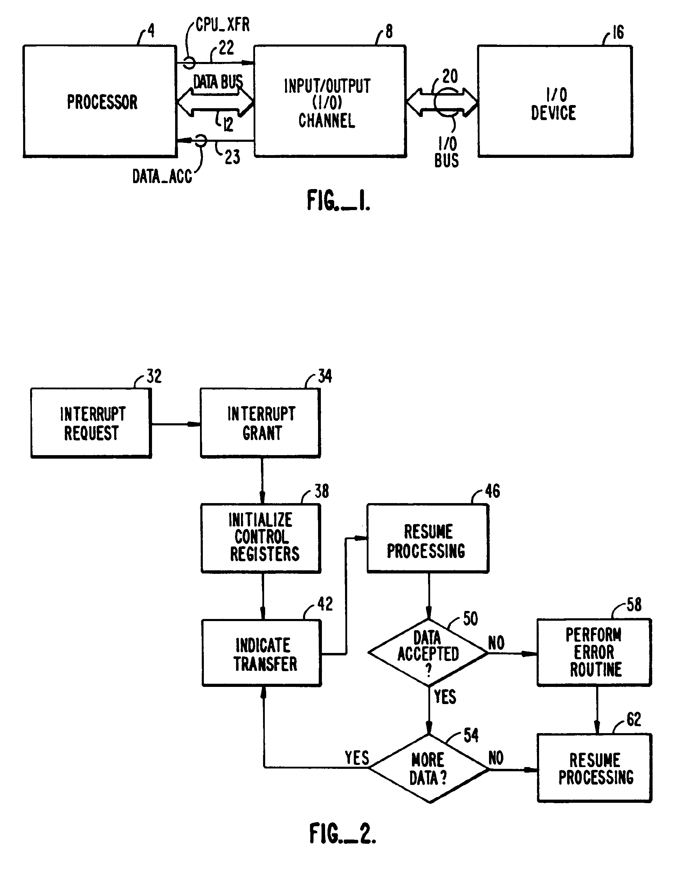

Fig. 1 is a block diagram of an apparatus according to the present invention wherein data is transferred between a CPU 4 and an I/O channel 8 over a data bus 12. Data in turn is transferred between I/O channel 8 and an I/O device 16 through an I/O bus 20. For controlling data transfer between CPU 4 and I/O channel 8, CPU 4 communicates a transfer request (CPU-XFR) signal to I/O channel over a line 22, and I/O channel 8 communicates a data accepted (DATA-ACC) signal to CPU 4 over a line 23.

Fig. 2 illustrates the normal sequence of operation when CPU 4 transfers data to or from I/O channel 8. As shown in Fig. 2, I/O channel 8 requests an interrupt from CPU 4-in a step 32, and CPU 4 grants the interrupt in a step 34. Following the interrupt grant, CPU 4 initializes the appropriate control registers in-the I/O channel 8 in a step 38. CPU 4 then places a block of data to be transferred on data bus 12 and makes a transfer request in a step 42. At this time the CPU resumes other tasks in a step 46 until it is time to perform the next transfer in the sequence. In this embodiment, a transfer is attempted after every five processors clock cycles. If it is ascertained in a step 50 that the data transfer has been accepted by the I/O channel (which indicates that another transfer may proceed), and if it is ascertained in a step 54 that there is more data to transfer, then the CPU 4 places the next block of data on data bus 12 and indicates that a transfer is to occur in step 42. If it was ascertained in step 50 that data was not accepted by the I/O channel, then CPU 4 performs an error routine designated for the situation in a step 58. At this time CPU 4 may abort the data transfer operation, retry the previous transfer, or proceed with a new transfer. After the error routine is performed and/or after there is no more data to transfer, processing resumes in a step 62.

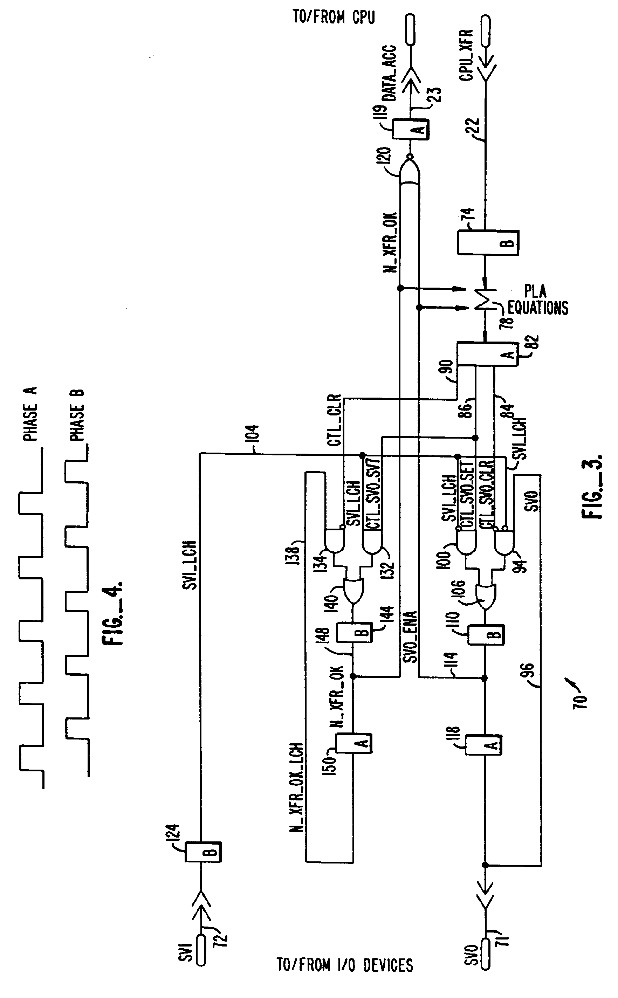

Fig. 3 is a schematic diagram of a control circuit 70 according to the present invention. Circuit 70 preferably is located within I/O channel 8, although that is not necessary. Circuit 70 receives the CPU-XFR signal from CPU 4 on line 22 indicating that a transfer is to occur, and CPU 4 receives a DATA-ACC signal on line 23 indicating whether or not the previous transfer was successful. Additionally, circuit 70 generates well known service out (SVO) signals to the I/O devices over line 71 and receives well known service in (SVI) signals from the I/O devices on a line 72.

In the discussion which follows, a "Phase A" latch is a conventional latch which is enabled by the positive or high-going portion of the Phase A pulse train illustrated in Fig. 4. Similarly, a "Phase B" latch is a conventional latch which is enabled by the positive or high going portion of the Phase B pulse train illustrated in Fig. 4. The Phase A and Phase B pulse trains may comprise any set of interleaved and nonoverlapping pulse trains wherein each Phase A positive pulse alternates with each Phase B positive pulse.

Circuit 70 receives the CPU-XFR signal and stores the signal in a Phase B latch 74 which in turn communicates the signal to a programmed logic array 78 for decoding. In the preferred embodiment, the CPU-XFR signal is actually several unique decodings of a larger set of coded control signals received from CPU 4. The decoded signal then is communicated to a Phase A latch 82 for producing a CTL-SVO-CLR signal on line 84, a CTL-SVO-SET signal on line 86, and a CTL-CLR signal on line 90. The CTL-SVO-CLR signal may be used for clearing the SVO signal when CPU 4 issues a transfer request which does not require a handshake, or when for some other reason I/O device 8 does not respond with an SVI signal.

The CTL-SVO-CLR signal is communicated to an inverting input terminal of an AND gate 94, as is the SVI-LCH signal on line 104, and the noninverting input terminal of AND gate 94 is connected for receiving an SVO signal on a line 96. The CTL-SVO-SET signal is communicated to the noninverting input terminal of an AND gate 100. The inverting input terminal of AND gate 100 is connected for receiving an SVI-LCH signal on a line 104 for reasons discussed below. The signals from AND gates 94 and 100 are communicated to an OR gate 106, the output terminal of which is connected to a Phase B latch 110. Phase B latch 110 communicates an SVO-ENA signal on a line 114 to a Phase A latch 118, to a NOR gate 120 and to program logic array 78. Phase A latch 118 communicates the SVO-ENA signal as an SVO signal to AND gate 94 on line 96 and to I/O devices 16 on line 71.

Circuit 70 receives an SVI signal from I/O devices 16 on line 72 wherein it is stored in a Phase B latch 124. Phase B latch 124 in turn communicates the SVI signal as an SVI-LCH signal on line 104. The SVI-LCH signal is communicated to the noninverting input terminal of AND gate 100, to an inverting input terminal of AND gate 94, and to one of the input terminals of an AND gate 132. The other input terminal of AND gate 132 is connected for receiving the CTL-SVO-SET signal from line 86.

Another AND gate 134 has its inverting input connected for receiving the CTL-CLR signal from line 90. The noninverting input of AND gate 134 receives an N-XFR-OK-LCH signal on a line 138. The output terminals from AND gates 132 and 134 are connected to the input terminals of an OR gate 140 which in turn has its output terminal connected to a Phase B latch 144. Phase B latch 144 communicates the signals so received as an N-XFR-OK signal on a line 148 to a Phase A latch 150, to NOR gate 120 and to program logic array 78. Phase A latch 150 communicates the N-XFR-OK signal to AND gate 134 as N-XFR-OK-LCH on line 138.

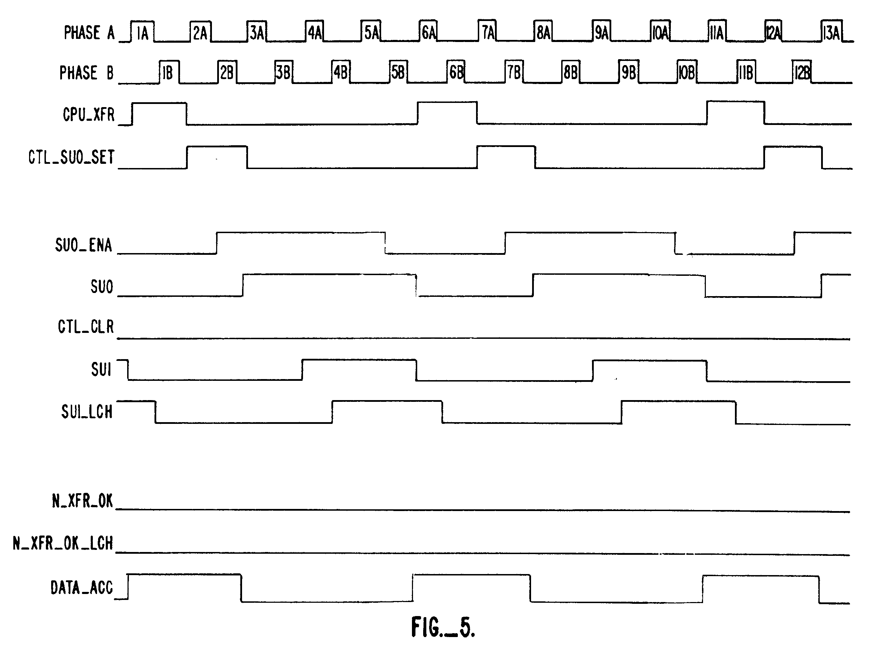

Normal operation of circuit 70 may be understood by referring to Figs. 3 and 5. Circuit 70 receives the CPU-XFR signal on line 22 and, if DATA-ACC is high (indicating the previous transfer was successful), CPU-XFR is decoded to produce a high CTL-SVO-SET signal on line 86 at the leading edge of pulse 2A. Since the SVI-LCH signal on line 104 ordinarily is low at this time, a high signal appears at the output of AND gate 100 which is communicated through OR gate 106 and to the input terminal of Phase B latch 110. At the leading edge of pulse 2B, the high signal from OR gate 106 is communicated to line 114 as a high SVO-ENA signal. At the leading edge of pulse 3A the high SVO-ENA signal appears as a high SVO signal on lines 71 and 96 and as a low DATA-ACC signal on line 23. The high SVO signal on line 96 is fed back to AND gate 94 which at this time is receiving a low signal from CTL-SVO-CLR on line 84, and a low SVI-LCH signal on line 104, and the resulting high signal at the output terminal of AND gate 94 is communicated through OR gate 106 and to the input of Phase B latch 110, thus maintaining the present state of the SVO-ENA, SVO and DATA-ACC signals. At the leading edge of pulse 4A, a high SVI signal should appear on line 72. The SVI signal appears as a high SVI-LCH signal at the leading edge of pulse 4B. The SVI-LCH signal is communicated to AND gates 94, 100 and 132. The high SVI-LCH signal applied to AND gate 100 prevents SVO from being set by CTL-SVO-SET should this signal go high. Since CTL-SVO-SET is now low, the high SVI-LCH signal has no effect on AND gate 132, and the N-XFR-OK signal on line 148 remains low.

The high SVI-LCH signal produced at the leading edge of pulse 4B, as described above, is used also for clearing the SVO signal. The high SVI-LCH signal on line 104 disables AND gate 94, and the low signal appearing at the output terminal of AND gate 94 is communicated through OR gate 106 and then to the input of Phase B latch 110. Accordingly, at the leading edge of pulse 5B, SVO-ENA goes low, and this low signal is communicated at the leading edge of pulse 6A as a high DATA-ACC signal on line 23 and a low SVO signal on lines 71 and 96. The high DATA-ACC signal on line 23 indicates that the transfer has occurred (although it has not yet completed). Since DATA-ACC indicates that a transfer has occurred, CPU 4 will anticipate transfer completion during the next transfer request at the leading edge of pulse 6A. At the same time, the SVI signal on line 72 should go low. The low SVI signal is communicated through Phase B latch 124 so that a low SVI-LCH signal appears on line 104 at the leading edge of pulse 6B. At this time the high CTL-SVO-SET signal also should appear on line 86. This combination of signals at the input terminals of AND gate 100 produces a high signal which is communicated through OR gate 106 and Phase B latch 110 to appear as a high SVO-ENA signal 114 at the leading edge of pulse 7B. The high SVO-ENA signal is communicated through Phase A latches 118 and 119, and the operation proceeds as described above.

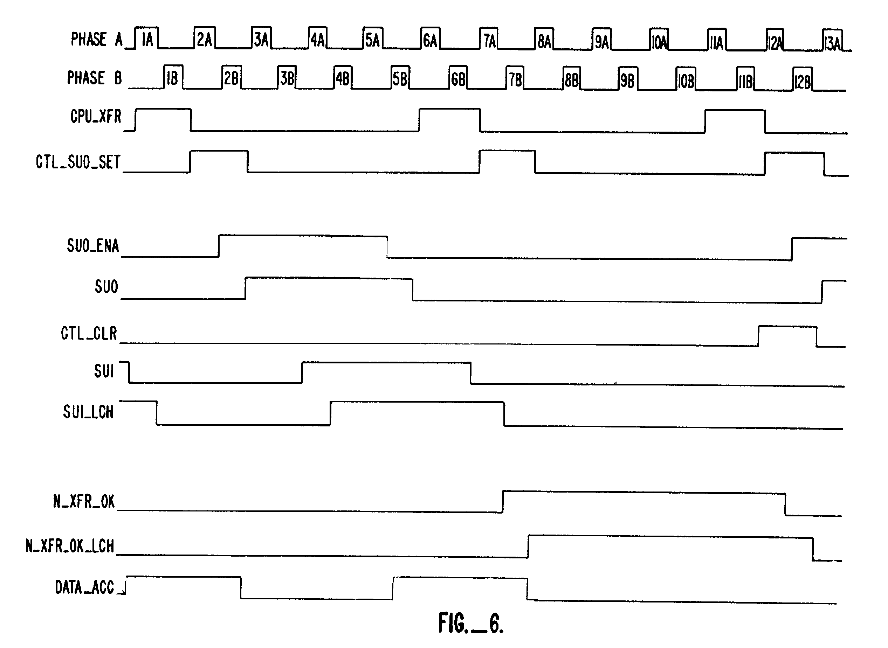

Fig. 6 is a timing diagram representing the operation of circuit 70 when a data transfer is inhibited. In Fig. 6, processing proceeds as in Fig. 5 and CPU 4 attempts another data transfer at the leading edge of pulse 6 A. However, the previous data transfer has not completed and the SVI signal did not go low at the leading edge of pulse 6A, possibly as a result of error correction steps taken by the controller, etc.. Consequently, a high SVI-LCH signal remains on line 104 at the leading edge of pulse 7A thus rendering AND gate 100 unresponsive to the high CTL-SVO-SET signal appearing on line 86. As a result, SVO-ENA and SVO remain low. At the same time, the high SVI-LCH signal coupled with the high CTL-SVO-SET signal at the input terminals of AND gate 132 produce a high signal which is propagated through OR gate 140 and to the input terminal of Phase B latch 144. At the leading edge of pulse 7B, a high N-XFR-OK signal appears on line 148, and this signal is communicated to NOR gate 120 and Phase A latch 150. At the leading edge of pulse 8A, the high N-XFR-OK-LCH signal appears on line 138 and the high N-XFR-OK signal appears as a low DATA-ACC signal on line 23. The high N-XFR-OK-LCH signal on line 138 coupled with the low CTL-CLR signal on line 90 produce a high signal at the output terminal of AND gate 134 for maintaining the high N-XFR-OK signal on line 148. Thus, when the CPU detects the low DATA-ACC signal on line 23 at the leading edge of pulse 11A, it knows that a previous data transfer was not completed properly. The CPU then may perform an error routine and either abort or retry the previous transfer or proceed with the next transfer. After the error is resolved, CPU 4 issues a CPU-XFR signal which sets CTL-CLR high to clear the high N-XFR-OK and N-XFR-OKLCH signals. Processing then resumes as under normal operation.

## Claims

1. An apparatus (8,70) for controlling data transfer from a first information processing element (4) to a second information processing element (16) comprising:
transfer request receiving means (22,74) for receiving a periodical transfer request signal CPU-XFR from the first information processing element indicating that a data transfer is to occur;
service out signal generating means (78,82,94,100, 106,110,118) for generating a service out signal SVO indicating to the second information processing element that a data transfer is to occur;
data accept signal generating means (119,120) for generating to the first information processing element a data accept signal DATA-ACC being set at a first (low) or a second (high) logical level;
service in signal receiving means (72,124) for receiving from the second information processing element a service in signal SVI being set at a first or at a second logical level,
wherein a first activation of signal CPU-XFR indicates a first data transfer request;
in response thereto, signal SVO is activated and simultaneously signal DATA-ACC is set to said first logical level indicating that the first data transfer request is pending;
in response to the activation of SVO, signal SVI is set to said second logical level indicating that the first data transfer request has been accepted by the second information processing element;
in response thereto signal DATA-ACC is set to said second logical level indicating to the first information processing element that the first data transfer request has been accepted although the data transfer itself might be not yet completed;
independently therefrom a second activation of signal CPU-XFR indicates a second data transfer request;
wherein if signal SVI is set to said first logical level before arrival of said second transfer request then the first data transfer has been successfully completed and the first data transfer steps are iterated for the second data transfer,
wherein if signal SVI is still set to said second logical level upon arrival of said second transfer request, then the first data transfer has not been successfully completed in which case SVO inhibiting means (132,134,140, 144,148,150,138) inhibits the further activation of signal SVO, sets signal DATA-ACC to said first logical level and holds it there until arrival of a third data transfer request, thereby indicating to the first information processing element that the first data transfer was not successfully completed.

2. The apparatus according to claim 1 further comprising data accept inhibit means (32,134,140,148,150) coupled to the data accept signal generating means (119,120) and to the SVI signal receiving means (72,124) for causing the data accept signal generating means (119,120) to generate the first data accept signal when a subsequent transfer request signal has been received by the request receiving means (22,74) and the second SVI signal has not been received by the SVI signal receiving means (72,124).

3. The apparatus according to claim 1 wherein, for any integer N greater than zero, the transfer request signal is normally generated N clock cycles after the generation of a preceding transfer request signal and wherein, for any integer M greater than zero, the SVO inhibiting means inhibits the further generation of signal SVO when the previous data transfer did not complete within M clock cycles after the generation of the preceding transfer request signal.

4. The apparatus according to claim 3 wherein M = 1.

5. A method of controlling data transfer from a first information processing element (4) to a second information processing element (16) comprising the steps of:
the first information processing element producing a periodical transfer request signal CPU-XFR indicating that a data transfer is to occur;
generating a service out signal SVO indicating to the second information processing element that a data transfer is to occur;
generating to the first information processing element a data accept signal DATA-ACC being set at a first (low) or a second (high) logical level;
receiving from the second information processing element a service in signal SVI being set at a first or at a second logical level,
wherein a first activation of signal CPU-XFR indicates a first data transfer request;
in response thereto, signal SVO is activated and simultaneously signal DATA-ACC is set to said first logical level indicating that the first data transfer request is pending;
in response to the activation of SVO, signal SVI is set to said second logical level indicating that the first data transfer request has been accepted by the second information processing element;
in response thereto signal DATA-ACC is set to said second logical level indicating to the first information processing element that the first data transfer request has been accepted although the data transfer itself might be not yet completed;
independently therefrom a second activation of signal CPU-XFR indicates a second data transfer request;
wherein if signal SVI is set to said first logical level before arrival of said second transfer request then the first data transfer has been successfully completed and the first data transfer steps are iterated for the second data transfer,
wherein if signal SVI is still set to said second logical level upon arrival of said second transfer request, then the first data transfer has not been successfully completed in which case SVO inhibiting means (132,134,140, 144,148,150,138) inhibits the further activation of signal SVO, sets signal DATA-ACC to said first logical level and holds it there until arrival of a third data transfer request, thereby indicating to the first information processing element that the first data transfer was not successfully completed.

6. The method according to claim 5 further comprising the step of generating the first data accept signal when a subsequent transfer request signal has been received and the second SVI signal has not been received.

7. The method according to claim 5 further comprising the step of, for any integer N greater than zero, receiving a subsequent transfer request signal N clock cycles after the reception of a preceding transfer request signal.

8. The method according to claim 7 wherein the SVO inhibiting step further comprises the step of, for any integer M greater than zero, inhibiting the further generation of the SVO signal when the previous data transfer did not complete within M clock cycles after the generation of the preceding transfer request signal.

9. The method according to claim 8 wherein M = 1.

## Patentansprüche

1. Vorrichtung (8, 70) zum Steuern einer Datenübertragung von einem ersten Informationsverarbeitungselement (4) zu einem zweiten Informationsverarbeitungselement (16), enthaltend:
Übertragungsanforderungs-Empfangseinrichtungen (22, 74) zum Empfangen eines periodischen Übertragungsanforderungssignals CPU-XFR, das anzeigt, daß eine Datenübertragung auftreten soll, vom ersten Informationsverarbeitungselement,
Ausgangsdienstsignal-Erzeugungseinrichtungen (78, 82, 94, 100, 106, 110, 118) zum Erzeugen eines Ausgangsdienstsignals SVO, das dem zweiten Informationsverarbeitungselement anzeigt, daß eine Datenübertragung auftreten soll,
Datenannahmesignal-Erzeugungseinrichtungen (119,120) zum Erzeugen eines auf einen ersten (niedrig) oder einen zweiten (hoch) logischen Pegel eingestellten Datenannahmesignals DATA-ACC an das erste Informationsverarbeitungselement,
Eingangsdienstsignal-Empfangseinrichtungen (72, 124) zum Empfangen eines Eingangsdienstsignals SVI, das auf einen ersten oder einen zweiten logischen Pegel eingestellt ist, vom zweiten Informationsverarbeitungselement,
wobei eine erste Aktivierung des Signals CPU-XFR eine erste Datenübertragungsanforderung anzeigt,
in Abhängigkeit davon das Signal SVO aktiviert wird und gleichzeitig das Signal DATA-ACC auf den ersten logischen Pegel eingestellt wird, was anzeigt, daß die erste Datenübertragungsanforderung läuft,
in Abhängigkeit von der Aktivierung von SVO das Signal SVI auf den zweiten logischen Pegel eingestellt wird, was anzeigt, daß die erste Datenübertragungsanforderung von dem zweiten Informationsverarbeitungselement angenommen wurde,
in Abhängigkeit davon das Signal DATA-ACC auf den zweiten logischen Pegel eingestellt wird, was dem ersten Informationsverarbeitungselement anzeigt, daß die erste Datenübertragungsanforderung angenommen wurde, obwohl die Datenübertragung selbst noch nicht abgeschlossen sein braucht, unabhängig davon eine zweite Aktivierung des Signals CPU-XFR eine zweite Datenübertragungsanforderung anzeigt,
wobei dann, wenn das Signal SVI vor der Ankunft der zweiten Übertragungsanforderung auf den ersten logischen Pegel eingestellt ist, die erste Datenübertragung erfolgreich abgeschlossen wurde und die Schritte der ersten Datenübertragung für die zweite Datenübertragung wiederholt werden, wobei dann, wenn das Signal SVI auf die Ankunft der zweiten Übertragungsanforderung noch auf den zweiten logischen Pegel eingestellt ist, die erste Datenübertragung nicht erfolgreich abgeschlossen wurde, wobei in diesem Fall SVO-Verhinderungseinrichtungen (132, 134, 140, 144, 148, 150, 138) die weitere Aktivierung des Signals SVO verhindern, das Signal DATA-ACC auch den ersten logischen Pegel einstellt und es dort bis zur Ankunft einer dritten Datenübertragungsanforderung hält, wodurch dem ersten Informationsverarbeitungselement angezeigt wird, daß die erste Datenübertragung nicht erfolgreich abgeschlossen wurde.

2. Vorrichtung nach Anspruch 1, ferner enthaltend Datenannahme-Verhinderungseinrichtungen (32, 134, 140, 148, 150), die mit den Datenannahmesignal-Erzeugungseinrichtungen (119, 120) und mit den SVI-Signal-Empfangseinrichtungen (72, 124) verbunden sind, um die Datenannahmesignal-Erzeugungseinrichtungen (119, 120) zu veranlassen, das erste Datenannahmesignal zu erzeugen, wenn ein nachfolgendes Übertragungsanforderungssignal von den Anforderungsempfangseinrichtungen (22, 74) empfangen und das zweite SVI-Signal von den SVI-Signal-Empfangseinrichtungen (72, 124) nicht empfangen wurden.

3. Vorrichtung nach Anspruch 1, wobei für jegliche ganze Zahl N größer als Null das Übertragungsanforderungssignal normalerweise N Taktzyklen nach der Erzeugung eines früheren Übertragungsanforderungssignals erzeugt wird, und wobei für jegliche ganze Zahl M größer als Null die SVO-Verhinderungseinrichtungen die weitere Erzeugung des Signals SVO verhindern, wenn die frühere Datenübertragung nicht innerhalb M Taktzyklen nach der Erzeugung des früheren Übertragungsanforderungssignals abgeschlossen ist.

4. Vorrichtung nach Anspruch 3, wobei M = 1.

5. Verfahren zum Steuern einer Datenübertragung von einem ersten Informationsverarbeitungselement (4) an ein zweites Informationsverarbeitungselement (16), enthaltend die Schritte:
Erzeugen eines periodischen Übertragungsanforderungssignals CPU-XFR, das anzeigt, daß eine Datenübertragung auftreten soll, durch das erste Informationsverarbeitungselement,
Erzeugen eines Ausgangsdienstsignals SVO, das dem zweiten Informationsverarbeitungselement anzeigt, daß eine Datenübertragung auftreten soll,
Erzeugen eines Datenannahmesignals DATA-ACC, das auf einen ersten (niedrig) oder einen zweiten (hoch) logischen Pegel eingestellt ist, für das erste Informationsverarbeitungselement,
Empfangen eines Eingangsdienstsignals SVI, das auf einen ersten oder einen zweiten logischen Pegel eingestellt ist, vom zweiten Informationsverarbeitungselement,
wobei eine erste Aktivierung des Signals CPU-XFR eine erste Datenübertragungsanforderung anzeigt,
in Abhängigkeit davon das Signal SVO aktiviert und gleichzeitig das Signal DATA-ACC auf den ersten logischen Pegel eingestellt wird, was anzeigt,
daß die erste Datenübertragungsanforderung läuft,
in Abhängigkeit von der Aktivierung von SVO das Signal SVI auf den zweiten logischen Pegel eingestellt wird, was anzeigt, daß die erste Datenübertragungsanforderung von dem zweiten Informationsverarbeitungselement angenommen wurde,
in Abhängigkeit davon das Signal DATA-ACC auf den zweiten logischen Pegel eingestellt wird, was dem ersten Informationsverarbeitungselement anzeigt, daß die erste Datenübertragungsanforderung angenommen wurde, obwohl die Datenübertragung selbst noch nicht abgeschlossen sein braucht, unabhängig davon eine zweite Aktivierung des Signals CPU-XFR eine zweite Datenübertragungsanforderung anzeigt,
wobei dann, wenn das Signal SVI vor der Ankunft der zweiten Übertragungsanforderung auf den ersten logischen Pegel eingestellt wurde, die erste Datenübertragung erfolgreich abgeschlossen wurde und die Schritte der ersten Datenübertragung für die zweite Datenübertragung wiederholt werden,
wobei dann, wenn das Signal SVI auf die Ankunft der zweiten Übertragungsanforderung hin noch auf den zweiten logischen Pegel eingestellt ist,
die erste Datenübertragung nicht erfolgreich abgeschlossen wurde, wobei in diesem Fall SVO-Verhinderungseinrichtungen (132, 134, 140, 144, 148, 150, 138) die weitere Aktivierung des Signals SVO verhindert, das Signal DATA-ACC auf den ersten logischen Pegel einstellt und es dort bis zur Ankunft einer dritten Datenübertragungsanforderung hält, wodurch dem ersten Informationsverarbeitungselement angezeigt wird, daß die erste Datenübertragung nicht erfolgreich abgeschlossen wurde.

6. Verfahren nach Anspruch 5, ferner enthaltend den Schritt des Erzeugens des ersten Datenannahmesignals, wenn ein nachfolgendes Übertragungsanforderungssignal empfangen wurde und das zweite SVI-Signal nicht empfangen wurde.

7. Verfahren nach Anspruch 5, ferner enthaltend den Schritt, für jegliche ganze Zahl N größer als Null ein nachfolgendes Übertragungsanforderungssignal N Taktzyklen nach dem Empfang eines früheren Übertragungsanforderungssignals zu empfangen.

8. Verfahren nach Anspruch 7, wobei der SVO-Verhinderungsschritt ferner den Schritt enthält, für jegliche ganze Zahl M größer als Null die weitere Erzeugung des SVO-Signals zu verhindern, wenn die frühere Datenübertragung nicht innerhalb M Taktzyklen nach der Erzeugung des früheren Übertragungsanforderungssignals abgeschlossen wurde.

9. Verfahren nach Anspruch 8, wobei M = 1.

## Revendications

1. Appareil (8, 70) de commande de transfert de donnée depuis un premier élément (4) de traitement d'information vers un deuxième élément (16) de traitement d'information comprenant:
un moyen récepteur (22, 74) de demande de transfert pour recevoir du premier élément de traitement d'information un signal périodique de demande de transfert CPU-XFR indiquant qu'un transfert de donnée doit se produire;
un moyen générateur (78, 82, 94, 100, 106, 110, 118) de signal de sortie de prise en charge pour engendrer un signal de sortie de prise en charge SVO indiquant au deuxième élément de traitement de l'information qu'un transfert de donnée doit se produire;
un moyen générateur (119, 120) de signal d'acceptation de donnée pour engendrer, en direction du premier élément de traitement de l'information, un signal DATA-ACC d'acceptation de donnée qui est placé à un premier niveau logique (bas) ou à un deuxième niveau logique (haut);
un moyen récepteur (72, 124) de signal d'entrée de prise en charge pour recevoir du deuxième élément de traitement de l'information un signal d'entrée de prise en charge SVI qui est placé à un premier ou à un deuxième niveau logique,
dans lequel une première activation du signal CPU-XFR indique une première demande de transfert de donnée;
en réponse à ceci, le signal SVO est activé et le signal DATA-ACC est simultanément placé audit premier niveau logique qui indique que- la première demande de transfert de donnée est en cours;
en réponse à l'activation de SVO, le signal SVI est placé audit deuxième niveau logique qui indique que la première demande de transfert de donnée a été acceptée par le deuxième élément de traitement de l'information;
en réponse à ceci, le signal DATA-ACC est placé audit deuxième niveau logique, ce qui indique au premier élément de traitement de l'information que la première demande de transfert de donnée a été acceptée, bien que le transfert de donnée lui-même puisse ne pas être achevé jusqu'ici;
indépendamment de ceci, une deuxième activation du signal CPU-XFR indique une deuxième demande de transfert de donnée;
dans lequel, si le signal SVI est placé audit premier niveau logique avant l'arrivée de ladite deuxième demande de transfert, le premier transfert de donnée a été achevé avec succès et les étapes de transfert de première donnée sont parcourues pour le deuxième transfert de donnée,
dans lequel, si le signal SVI est encore placé audit deuxième niveau logique lors de l'arrivée de ladite deuxième demande de transfert, le premier transfert de donnée n'a pas été achevé avec succès, auquel cas un moyen inhibiteur (132, 134, 140, 144, 148, 150, 138) de SVO inhibe la poursuite de l'activation du signal SVO, place le signal DATA-ACC audit premier niveau logique et l'y maintient jusqu'à l'arrivée d'une troisième demande de transfert de donnée, ce qui indique au premier élément de traitement de l'information que le premier transfert de donnée n'a pas été achevé avec succès.

2. Appareil selon la revendication 1 comprenant en outre un moyen inhibiteur (32, 134, 140, 148, 150) d'acceptation de donnée couplé au moyen générateur (119, 120) de signal d'acceptation de donnée et au moyen récepteur (72, 124) de signal SVI de façon à amener le moyen générateur (119, 120) du signal d'acceptation de donnée à engendrer le premier signal d'acceptation de donnée lorsqu'un signal ultérieur de demande de transfert a été reçu par le moyen récepteur (22, 74) de demande et que le deuxième signal SVI n'a pas été reçu par le moyen récepteur (72, 124) de signal SVI.

3. Appareil selon la revendication 1 dans lequel le signal de demande de transfert est normalement engendré N cycles d'horloge après la génération d'un signal précédent de demande de transfert, N étant un entier quelconque supérieur à zéro, et dans lequel le moyen inhibiteur de SVO inhibe la poursuite de la génération du signal SVO lorsque le transfert précédent de donnée n'a pas éte atteint dans les M cycles de signaux d'horloge qui suivent la génération du signal précédent de demande de transfert, M étant un entier quelconque supérieur à zéro.

4. Appareil selon la revendication 3 dans lequel M = 1.

5. Procédé de commande de transfert de donnée depuis un premier élément (4) de traitement de l'information vers un deuxième élément (16) de traitement de l'information comprenant les étapes consistant à:
faire produire par le premier élément de traitement de l'information un signal périodique de demande de transfert CPU-XFR qui indique qu'un transfert de donnée doit se produire;
engendrer un signal de sortie de prise en charge SVO indiquant au deuxième élément de transfert d'information qu'un transfert de donnée doit se produire;
engendrer vers ledit . premier élément de traitement de l'information un signal DATA-ACC d'acceptation de donnée qui est placé à un premier niveau logique (bas) ou à un deuxième niveau logique (haut);
recevoir dudit deuxième élément de traitement de l'information un signal d'entrée de prise en charge SVI qui est placé à un premier ou à un deuxième niveau logique,
dans lequel une première activation du signal CPU-XFR indique une première demande de transfert de donnée;
en réponse à ceci, le signal SVO est activé et le signal DATA-ACC est simultanément placé audit premier niveau logique qui indique que la première demande de transfert de donnée est en cours;
en réponse à l'activation de SVO, le signal SVI est placé audit deuxième niveau logique qui indique que la première demande de transfert de donnée a été acceptée par le deuxième élément de traitement de l'information;
en réponse à ceci, le signal DATA-ACC est placé audit deuxième niveau logique, ce qui indique au premier élément de traitement de l'information que la première demande de transfert de donnée a été acceptée, bien que le transfert de donnée lui-même puisse ne pas être achevé jusqu'ici;
indépendamment de ceci, une deuxième activation du signal CPU-XFR indique une deuxième demande de transfert de donnée;
dans lequel, si le signal SVI est placé audit premier niveau logique avant l'arrivée de ladite deuxième demande de transfert, le premier transfert de donnée a été achevé avec succès et les étapes de transfert de première donnée sont parcourues pour le deuxième transfert de donnée,
si le signal SVI est encore placé audit deuxième niveau logique lors de l'arrivée de ladite deuxième demande de transfert, le premier transfert de donnée n'a pas été achevé avec succès, auquel cas un moyen inhibiteur (132, 134, 140, 144, 148, 150, 138) de SVO inhibe la poursuite de l'activation du signal SVO, place le signal DATA-ACC audit premier niveau logique et l'y maintient jusqu'à l'arrivée d'une troisième demande de transfert de donnée, ce qui indique au premier élément de traitement de l'information que le premier transfert de donnée n'a pas été achevé avec succès.

6. Procédé selon la revendication 5 comprenant en outre l'étape consistant à engendrer le premier signal d'acceptation de donnée lorsqu'un signal ultérieur de demande de transfert a été reçu et que le deuxième signal SVI n'a pas été reçu.

7. Procédé selon la revendication 5 comprenant en outre l'étape consistant à recevoir un signal ultérieur de demande de transfert N cycles de signaux d'horloge après la réception d'un signal précédent de demande de transfert, N étant un entier quelconque supérieur à zéro.

8. Procédé selon la revendication 7, dans lequel l'étape d'inhibition de SVO comprend en outre l'étape consistant à inhiber la poursuite de la génération du signal SVO lorsque le transfert précédent de donnée n'a pas été achevé dans les M cycles d'horloge qui suivent la génération du précédent signal de demande de transfert, M étant un entier quelconque supérieur à zéro.

9. Procédé selon la revendication 8 dans lequel M = 1.
